# EUROPÄISCHE PATENTSCHRIFT

(11) **EP 1 048 519 B1**
(45) Veröffentlichungstag und Bekanntmachung des Hinweises auf die Patenterteilung: **15.12.2004**
(21) Anmeldenummer: 99108316.3
(22) Anmeldetag: 28.04.1999
(51) Int. Cl.: B60P 3/20, B62D 33/04

(54) **Kühlfahrzeug**
Refrigerated vehicle
Véhicule frigorifique

(43) Veröffentlichungstag der Anmeldung: 02.11.2000
(73) Patentinhaber: Brandt Kühlfahrzeugbau, 32699 Extertal (DE)
(72) Erfinder: Brandt, Werner, 32699 Extertal (DE)
(74) Vertreter: Stracke, Alexander, Dipl.-Ing.

(56) Entgegenhaltungen:
- DE-U- 8 328 147
- DE-U- 29 820 764
- US-A- 3 185 111
- US-A- 4 221 421
- US-A- 4 345 862
- US-A- 5 597 193
- US-A- 5 704 676

## Beschreibung

Die Erfindung betrifft ein Kühlfahrzeug mit einem kofferartigen Aufbau, dessen Laderaum durch flächige und bewegliche und durch in den Eckbereichen mit Verriegelungselementen ausgerüstete Trennwandelemente in Kammern aufteilbar ist.

Bei einem Kühlfahrzeug ist es notwendig, den Laderaum in Kammern zu unterteilen, da mit dem Kühlfahrzeug Gefriergut, Kühlgut und nicht zu kühlende Trockenfracht gefahren wird. Bei den bisher bekannten Kühlfahrzeugen ist es deshalb bekannt, den Laderaum durch zwei in Längsrichtung verlaufende Trennwände in drei Kammern zu unterteilen. Bei solchen Kühlfahrzeugen ist es außerdem bekannt, dass die Längstrennwände quer verschoben werden, so dass im Bedarfsfalle der Laderaum entweder ungeteilt oder in zwei Kammern aufgeteilt ist.

Die Längstrennwände können auch geteilt sein, da es im Normalfall nicht möglich ist, die gesamte Längstrennwand zu verschieben. Damit die Kühlleistung so gering wie möglich gehalten werden kann, kann das Volumen durch in Längsrichtung verschiebbare Türen vergrößert oder verkleinert werden. Diese Türen können zur Entnahme des Gutes unter die Decke des Laderaumes geschwenkt werden. Bei diesen Ausführungen der Kühlfahrzeuge ist die Aufteilung des Laderaumes vorbestimmt und die einzelnen Kammern können nur durch Verschieben der Türen vergrößert oder verkleinert werden. Eine individuelle Aufteilung des Laderaumes ist mit den bislang bekannten Ausführungen nicht möglich.

Zur Führung der Türen sind unter der Decke des Aufbaus Führungsschienen montiert, so dass eine Verschiebung der Türen in Querrichtungnicht möglicht ist.

Um das Verschieben der Längstrennwände zu erleichtern, ist bereits durch die gattungsgemäße DE 298 20 764 U1 vorgeschlagen worden, jede Längstrennwand aus zwei Einzelwandelementen zu bilden. In den Eckbereichen sind diese Einzelwandelemente in der Decke und dem Boden zugeordneten Profilschienen lösbar derart verriegelt, dass nach der Entriegelung in einem Eckbereich das Einzelwandelement um die andere Verriegelung geschwenkt werden kann. Nach dem Verriegeln der zunächst entriegelten Verriegelung kann das Einzelwandelement dann um diese Verriegelung geschwenkt werden. Jedes Einzelwandelement kann demzufolge durch zweimaliges Schwenken von der normalen Betriebsstellung an die jeweils zugeordnete Längswand des kofferartigen Aufbaus gebracht werden. Dadurch ist es möglich, dass ein in drei Kammern aufgeteilter Aufbau auch in zwei Kammern unterschiedlicher Größe aufgeteilt werden kann oder dass der gesamte Laderaum genutzt werden kann. Eine individuelle Aufteilung des Laderaumes ist auch bei dieser Ausführung nicht möglich, da die Einzelwandelemente ausschließlich in Querrichtung bewegt werden können.

Aus der G 83 28 147.9 ist ein Kühlfahrzeug bekannt, bei dem an der Decke des Aufbaus mehrere Streifen angebracht sind, um daran in Längsrichtung des Aufbaus verschiebbare Vorhänge zu haltern. Dadurch wird es möglich, dass auch nur ein Teil des Aufbaus gekühlt wird, wenn beispielsweise der Aufbau teilweise entleert ist oder wenn ungekühlte Trockenfracht transportiert wird. Eine individuelle Aufteilung des Laderaumes ist auch mit dieser Ausführung nicht möglich. Darüber hinaus sind die Vorhänge beweglich, so das beim Beschleunigen und beim Bremsen des Kühlfahrzeuges Spalten entstehen, durch die ein Luftaustausch erfolgt.

Der Erfindung liegt die Aufgabe zugrunde ein Kühlfahrzeug der eingangs näher beschriebenen Art so weiter zu entwickeln, dass die Trennwandelemente derart verschoben werden können, dass sie zur Bildung der Kammern an beliebig wählbaren Stellen innerhalb des Laderaumes festgesetzt werden können.

Die gestellte Aufgabe wird gelöst, indem die beweglichen Trennwandelemente baugleich gestaltet und nach Art eines Baukastensystems innerhalb des gesamten Laderaumes zur Bildung der Kammern in Längs- und in Querrichtung bewegbar sind, wobei die feste Breite des kofferartigen Aufbaus ein ganzzahliges Vielfaches der Breite eines Trennwandelementes ist, und dass jedes Trennwandelement an einer ausgewählten Stellung innerhalb des Laderaumes platzierbar ist, und dass die bildbaren Kammern gleich oder unterschiedlich groß sind.

Die Breite eines Trennwandelementes ist so gewählt, dass aus mindestens zwei Trennwandelementen eine quer zur Fahrzeuglängsrichtung stehende Querwand aufgebaut werden kann. Da in den Eckbereichen Verriegelungselemente vorgesehen sind, ist es möglich, die Verriegelungselemente einer Seite zu entriegeln und das Trennwandelement um die durch die gegenüberliegendenden Verriegelungselemente gebildete Achse zu schwenken. Dadurch ist es möglich, dass jedes Trennwandelement von einer Seite zur anderen Seite oder vom vorderen in den hinteren Bereich durch mehrmaliges Schwenken bewegt wird. Demzufolge sind die Trennwandelemente als Baukastensystem anzusehen.

Es lassen sich deshalb die verschiedensten Kammern bilden. Diese sind nunmehr nicht nur durch Unterteilungen in Längsrichtung zu bilden, sondern auch durch Unterteilungen in Querrichtung. Dabei kann auch eine Vielzahl von Kammern mit einer relativ geringen Grundfläche gebildet werden. Derartige Kammern können dann durch Entriegeln der Verriegelungselemente einseitig geöffnet werden, da das betreffende Trennwandelement dann die Funktion einer Tür hat.

Die Unterteilung kann auf die jeweiligen Erfordernisse abgestimmt werden und sogar während einer Auslieferungsfahrt geändert werden. Es ist jedoch auch möglich, dass die Trennwandelemente an einem Randbereich oder an mehreren Randbereichen des Aufbaus funktionslos abgestellt werden, so dass der restliche Laderaum als Ganzes zur Verfügung steht. Die vielfältigen Möglichkeiten ergeben sich aus dem Baukastensystem. Die baugleiche Ausführung der Trennwandelemente bezieht sich auf die Außenabmessungen und die sich aus den Verriegelungselementen ergebenden Anschlussmaße, nicht jedoch beispielsweise auf die Dicken und die Materialien der Trennwandelemente.

Damit es sinngemäß keine Hindernisse für die zu bewegenden Trennwandelemente gibt, ist vorgesehen, dass sie im Dach und im Boden des Aufbaus jeweils in einer Ebene liegende Lochschiene mittels der Verriegelungselemente festgelegt sind. Es entstehen dann keine vorstehenden Führungsschienen, die bislang für die Verschiebung der Türen bzw. der Quertrennwände notwendig waren.

Eine konstruktiv einfache, sichere und gut zu handhabende Ausführung wird erreicht, wenn die Verriegelungselemente durch Federn belastete Verriegelungsbolzen sind, und dass die Verriegelungsbolzen einer Seite jedes Trennwandelementes durch ein zugehöriges Gestänge entgegen der Wirkung der Federn entriegelbar sind. Durch die Federn werden die Verriegelungsbolzen selbsttätig in die verriegelnde Stellung gedrückt. Sobald also der Verriegelungsbolzen passend zum zugehörigen Loch der Lochschiene steht, wird er direkt durch die Feder dort hineingedrückt. Selbst wenn versehentlich das Wandelement nur durch einen oberen oder unteren Verriegelungsbolzen verriegelt ist, erfolgt die Verriegelung beispielsweise durch eine geringfügige Bewegung des Trennwandelementes während der Fahrt. Dadurch wird eine extrem hohe Sicherheit geschaffen.

Außerdem braucht der Fahrer des Kühlfahrzeuges zum Verriegeln das Trennwandelement nicht genau auszurichten, sondern er kann es solange hin- und herbewegen, bis der Verriegelungsbolzen in die Lochschiene eingreift. Da die Federn den Verriegelungsbolzen in die verriegelnde Stellung drücken, kann es nicht zu einem ungewollten Entriegeln kommen. Das Gestänge jeder Seite weist zweckmäßigerweise zwei Betätigungsstangen auf, die sich an der dem Verriegelungsbolzen abgewandten Bereich überlappen, dass in diesem Bereich ein Drehriegel derart angeordnet ist, dass sich bei einer vorgegebenen Drehrichtung die Betätigungsstangen zur Entriegelung der Verriegelungsbolzen in entgegengesetzten Richtungen bewegen.

Durch diese Gestaltung kann der obere und untere Verriegelungsbolzen einer Seite gleichzeitig entriegelt werden. Zum Verriegeln des Trennwandelementes durch die beiden Verriegelungsbolzen kann der Drehriegel bereits vor Erreichen der endgültigen Stellung entgegen der vorherigen Drehrichtung gedreht werden, so dass die Betätigungsstangen bzw. die Verriegelungsbolzen ungehindert in die verriegelnde Stellung verfahren werden können, sobald die Verriegelungsbolzen passend zu den jeweiligen Löchern der Lochschiene stehen.

Da die Trennwandelemente in den verschiedensten Stellungen innerhalb des kofferartigen Aufbaus festgelegt werden können, ist zur einfachen Handhabung vorgesehen, dass der Drehriegel an beiden Seiten des Trennwandelementes einen Handgriff aufweist.

Zum einfachen Entriegeln der Verriegelungsbolzen mittels des Drehriegels ist vorgesehen, dass jede Betätigungsstange an dem dem Verriegelungsbolzen abgewandten Ende in Richtung zum gegenüberliegenden Außenrand des Trennwandelementes abgewinkelt ist, und dass zwischen den beiden abgewinkelten Stegen der Drehriegel gelagert ist. Dadurch werden bei Drehung des Drehriegels in einfachster Weise die Betätigungsstangen in die entgegengesetzten Richtungen bewegt.

Die abgewinkelten Stege liegen in günstiger Höhe etwa im mittleren Bereich des Trennwandelementes. Durch die Überlappung liegt der dem oberen Verriegelungsbolzen zugehörige Steg unter dem abgewinkelten Steg, der dem Verriegelungsbolzen zugeordnet ist. Zum Entriegeln des Verriegelungsbolzens vergrößert sich der Abstand zwischen den beiden abgewinkelten Stegen. Dazu ist der Drehriegel mit einem Druckstück ausgestattet, welches in der Symmetrieachse gelagert ist.

Damit das Trennwandelement beim Bewegen nicht über den Boden geschleift wird, ist vorgesehen, dass jedes Trennwandelement in den beiden unteren Eckbereichen mit jeweils einer Stützrolle versehen ist, die auf einem horizontalen Bolzen frei drehbar gelagert ist. Dadurch wird außerdem nur eine geringe Kraft zum Bewegen des Trennwandelementes notwendig, so dass der Fahrer des Kühlfahrzeuges entlastet wird.

Eine kompakte Ausführung wird erreicht, wenn jede den Verriegelungsbolzen in die verriegelnde Position drückende bzw. haltende Feder eine Druckfeder ist, die sich mit einem Ende an einer Innenfläche eines Führungsprofils für den Verriegelungsbolzen und mit dem anderen Ende an einer Ringfläche oder einem Querstift des Verriegelungsbolzens abstützt. Dabei ist es vorteilhaft, wenn die Druckfeder den Verriegelungsbolzen auf einer bestimmten Länge umhüllt.

Jede Betätigungsstange ist zweckmäßigerweise an dem dem Verriegelungsbolzen zugewandten Ende abgewinkelt und mit dem Verriegelungsbolzen fest verbunden. Jede Betätigungsstange kann aus mindestens zwei Abschnitten eines Profils bestehen, die miteinander verbunden sind. Dadurch wird die Montage erleichtert.

Die Trennwandelemente sind plattenförmig ausgebildet. Sie bestehen aus einem Material, welches thermisch isolierend ist. Um die Bauteile für die Ver- und Entriegelung mittels der Verriegelungselemente anbringen zu können, ist vorgesehen, dass jedes Trennwandelement zumindest an den vertikalen Längsrändern durch eine Profilschiene begrenzt ist, dass innerhalb dieser Profilschiene das Gestänge und die Verriegelungselemente angeordnet sind.

Dabei ist zu berücksichtigen, dass keine Kältebrücken entstehen. Es ist deshalb zweckmäßig, wenn die Profilschiene ein Verbundprofil ist, welches aus zwei Metallprofilen und wenigstens einem die Metallprofile verbindenden Isoliersteg besteht.

Durch die zuvor beschriebene Ausführung eines Kühlfahrzeuges ist es in einfachster Weise möglich, dass der Fahrer die auszuliefernde Ware innerhalb des kofferartigen Aufbaus kommissioniert, da aus den Trennwandelementen sinngemäß Kühloder Gefrierschränke oder Kühl- oder Gefrierzellen gebildet werden können. Der beschriebene Aufbau des Fahrzeuges ist besonders für kleiner Aufbauten zweckmäßig einsetzbar, beispielsweise wenn die Länge unter 5,5 m liegt.

Anhand der beiliegenden Zeichnungen wird die Erfindung noch näher erläutert.

Es zeigen:
- Fig. 1-6: ein erfindungsgemäßes Kühlfahrzeug, dessen kofferartiger Aufbau in einem Horizontalschnitt dargestellt ist mit den Trennwandelementen in sechs verschiedenen Anordnungen,
- Figur 7: ein Trennwandelement des erfindungsgemäßen Kühlfahrzeuges als Einzelheit in einer Vorder- oder Rückansicht.

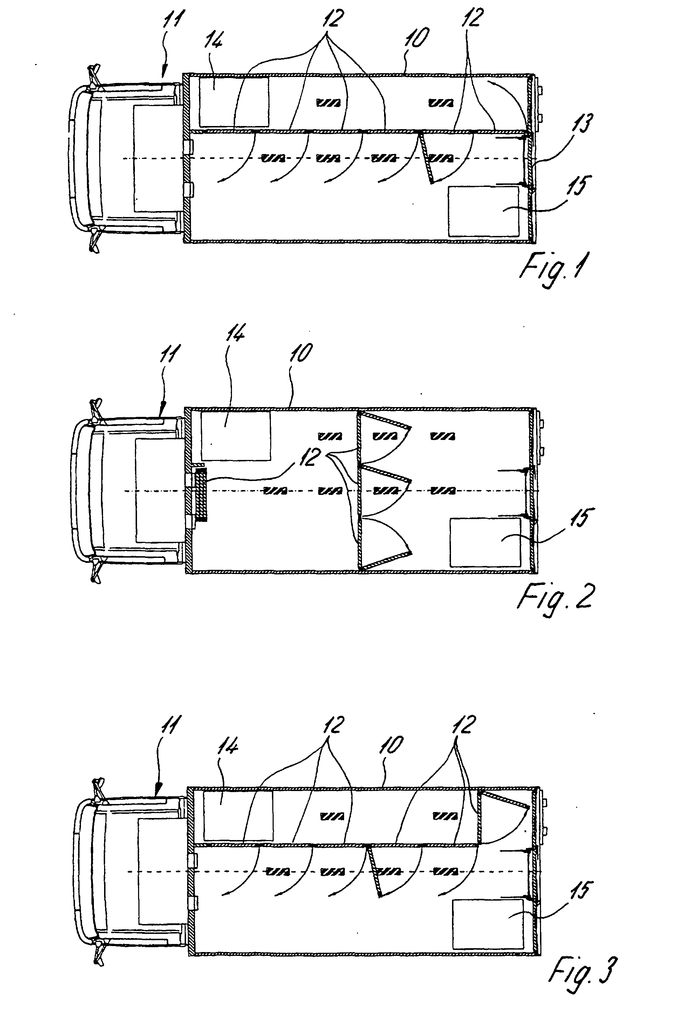

Der kofferartige Aufbau 10 des erfindungsgemäßen Kühlfahrzeuges 11 kann mit einer bestimmten Anzahl von baugleichen Trennwandelementen 12 ausgestattet werden, wobei durch die Figuren 1-6 belegt ist, daß keine bestimmte Anzahl notwendig ist. Es sollten jedoch soviele Trennwandelemente 12 vorhanden sein, daß zumindest entsprechend der Figur 1 eine Längstrennwand aus den Trennwandelementen 12 zusammengesetzt werden kann.

In nicht näher dargestellter Weise sind in den dargestellten Ausführungsbeispielen in der Decke und im Boden des kofferartigen Aufbaus 10 jeweils zwei parallel und im Abstand zueinander verlaufende Lochschienen eingelassen. Dabei sind die Abstände zu den beiden Seitenwänden des kofferartigen Aufbaus 10 und der Abstand zwischen den beiden Lochschienen gleich.

Die Trennwandelemente 12 erstrecken sich über die gesamte Höhe des Laderaumes des kofferartigen Aufbaus 10.

In der Figur 1 ist eine Anordnung dargestellt, bei der der kofferartige Aufbau 10 durch eine Längstrennwand in zwei Kammern unterteilt ist. Die die Längstrennwand bildenden Trennwandelemente 12 lassen sich entsprechend den Pfeilen schwenken, so daß die in der Darstellung kleinere rechte Kammer nicht nur von hinten zugänglich ist, sondern daß bei einer entsprechenden Schwenkung eines bestimmten Trennwandelementes 12 die Kammer über die gesamte Länge zugänglich ist, um beispielsweise verschiedene Waren daraus zu entnehmen.

Die Figur 1 zeigt, daß das hintere, der Ladebordwand 13 zugeordnete Trennwandelement 12 um eine dem Führerhaus zugewandt liegende Achse schwenkbar ist, um beispielsweise die rechte Kammer zu verkleinern. Dazu ist dieses Trennwandelement 12 entgegen dem Uhrzeigersinn zu schwenken.

Durch die anderen Pfeile soll angedeutet werden, daß jedes der restlichen Trennwandelemente 12 im Uhrzeigersinn geschwenkt werden kann, d. h. in die linke und größere Kammer hinein, wobei nicht alle Trennwandelement 12 gleichzeitig geschwenkt werden, sondern nur ein bestimmtes, um Ware zu entnehmen, die an einer bestimmten Stelle der rechten Kammer gelagert ist.

Bei der Ausführung nach der Figur 1 ist die rechte Kammer beispielsweise auf eine Temperatur von minus 20°C abgekühlt, um Gefriergut zu transportieren, während die Temperatur in der linken Kammer nur auf plus 3°C heruntergekühlt wurde, um Kühlgut aufzunehmen.

In der Figur 2 ist dargestellt, daß durch eine aus drei Trennwandelementen 12 gebildete Querwand der Laderaum des kofferartigen Aufbaus 10 in zwei Kammern zu unterteilen ist. Die vordere, dem Führerhaus zugewandte Kammer ist für Gefriergut geeignet, während die hintere für Kühlgut heruntergekühlt ist.

Im dargestellten Ausführungsbeispiel sind die Kammern gleich groß. Durch eine Verschiebung der Quertrennwand können die Kammern auch unterschiedlich groß sein.

Die Figur 2 zeigt außerdem, daß die nicht benötigten Trennwandelemente 12 beispielsweise im vorderen Bereich des Laderaumes abgestellt werden können.

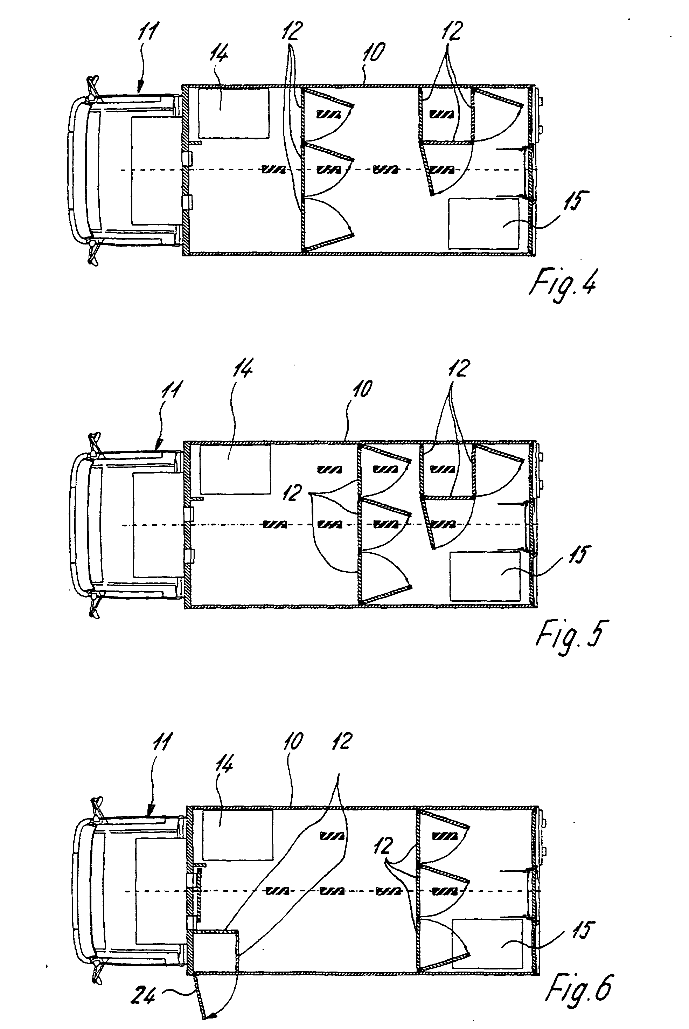

Durch die Figur 3 ist belegt, daß durch das hintere Trennwandelement 12 die Gefriergutkammer verkürzt werden kann und daß zum Betreten dieser Kammer das querstehende Trennwandelement 12 um eine Achse geschwenkt werden kann, die benachbart der rechten Seitenwand liegt. Dazu ist dann die gegenüberliegende Seite des Trennwandelementes 12 in noch näher erläuterter Weise zu entriegeln.

Die Figur 4 zeigt wiederum eine Unterteilung des Laderaumes durch eine Querwand in eine relativ kleine Gefriergutkammer und eine gegenüber dieser größeren Kühlgutkammer.

Die Figur zeigt, daß durch drei, jeweils im rechten Winkel zueinander stehende Trennwandelemente 12 eine Kammer oder eine zusätzliche Zelle gebildet werden kann, z. B. für den Transport von Frischfisch unter schmelzendem Eis, wobei diese an die rechte oder linke Seitenwand angrenzen kann.

Die Figur 4 zeigt, daß die diese Kammer oder Zelle begrenzenden Trennwandelemente 12 beliebig geschwenkt werden können.

Die Ausführung der Figur 5 zeigt, daß die Gefriergutkammer vergrößert ist, indem die aus drei Trennwandelementen 12 gebildete Querwand in Richtung zur Ladebordwand 13 verschoben wurde. Dies erfolgt durch Schwenken der Trennwandelemente 12 im Wechsel um die beiden Längskanten.

Bei der Ausführung nach der Figur 6 wurde die Trennwand noch weiter in Richtung zur Ladebordwand 13 versetzt, dies erfolgt wiederum durch Schwenken um die Längskanten der Trennwandelemente 12.

Die zusätzliche Zelle vorn links wird gegenüber einer Seitentür 24 angebracht, wenn z. B. Leergut und Rücknahmen nicht mit dem Kühlgut aus hygienischen Gründen in Berührung kommen dürfen. Im dargestellten Ausführungsbeispiel ist der Laderaum des kofferartigen Aufbaus 10 mit zwei Verdampfern 14, 15 ausgestattet, wobei der in der rechten oberen Ecke montierte Verdampfer 14 für die Minustemperaturen und der in der linken oberen hinteren Ecke montierte Verdampfer 15 für die Kühltemperaturen ausgelegt ist.

Es ergibt sich aus den Figuren, daß die gezeigten Ausführungen nur beispielhaft zu sehen sind, da viele Variationen möglich sind.

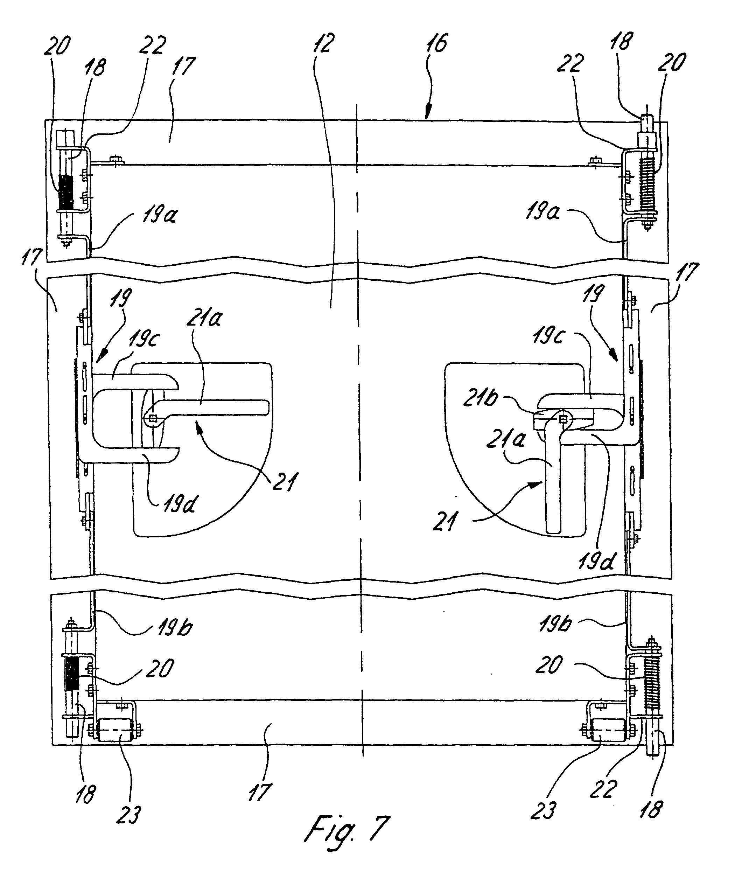

In der Figur 7 ist ein Ausführungsbeispiel des Trennwandelementes 12 des erfindungsgemäßen Kühlfahrzeuges 11 dargestellt. Jedes Trennwandelement 12 des Kühlfahrzeuges 11 besteht aus einem Rahmen 16, der aus vier Abschnitten einer Profilschiene 17 zusammengesetzt ist. Die Profilschiene 17 besteht aus zwei Aluminiumprofilen, die durch einen Isoliersteg aus einem thermisch isolierenden Material miteinander verbunden sind.

Die Höhe des Trennwandelementes 12 stimmt mit der inneren Höhe des Aufbaus 10 des Kühlfahrzeuges 11 überein oder stimmt im wesentlichen überein. Die Breite beträgt im dargestellten Ausführungsbeispiel ein Drittel der inneren Breite des Aufbaus 10. Die Breite könnte jedoch auch anders gewählt werden, jedoch ist Voraussetzung, daß aus mindestens zwei aneinandergereihten Trennwandelementen 12 eine Querwand gebildet werden kann.

In den Eckbereichen ist jedes Trennwandelement 12 mit Verriegelungselementen in Form von Verriegelungsbolzenen 18 ausgestattet. Die Verriegelungsbolzenen 18 sind den vertikalen Profilschienen 17 zugeordnet und greifen in nicht näher dargestellter Weise in Lochschienen des Aufbaus 10 ein, die im Boden und im Dach des Aufbaus 10 eingelassen sind.

Die in der Darstellung linken Verriegelungsbolzen 18 sind in der entriegelten Stellung dargestellt, während die in der Darstellung rechten Verriegelungsbolzen 18 in der verriegelnden Stellung dargestellt sind.

Die Verriegelungsbolzen 18 lassen sich von der verriegelnden Stellung mittels eines Gestänges 19 in die in der Darstellung rechte verriegelnde Stellung und in die in der Darstellung linke Entriegelungsstellung verfahren. Jedes Gestänge 19 einer Seite ist fest mit dem zugehörigen Verriegelungsbolzen 18 verbunden. Die Entriegelung der Verriegelungsbolzen 18 erfolgt entgegen der Wirkung von Druckfedern 20, die die Verriegelungsbolzen 18 in der verriegelnden Stellung halten bzw. in die verriegelnde Stellung drücken.

Der Betätigungsnocken 21b ist so gestaltet, daß die Entriegelungsbolzen 18 in der entriegelten Position (Figur 7 links) gehalten werden. Die Verriegelung wird erst durch das Drehen des Drehriegels 21 ausgelöst. Erst dann werden die Druckfedern 20 wieder in der Form wirksam, indem sie die Verriegelungsbolzen 18 in die verriegelte Stellung (Figur 7 rechts) drücken. Um die Verriegelungsbolzen 18 in der entriegelnden Stellung zu halten, ist der Betätigungsnocken 21b mit zwei parallelen sowie planen Auflageflächen versehen, die in der entriegelnden Stellung die abgewinkelten Stege 19c, 19d kontaktieren.

Jedes Gestänge 19 einer Seite besteht aus zwei Betätigungsstangen 19a und 19b, wobei sich die den Verriegelungsbolzen 18 abgewandten Enden überlappen und abgewinkelt sind. Dadurch werden Stege 19c und 19d gebildet, die zur Mitte des Trennwandelementes 12 gerichtet sind und sowohl in der verriegelten als auch in der entriegelten Stellung im Abstand zueinander stehen. Dabei steht der obere abgewinkelte Steg 19c der unteren Betätigungsstange 19b über dem abgewinkelten Steg 19d der oberen Betätigungsstange 19a.

Durch eine Drehbewegung eines zwischen den abgewinkelten Stegen 19c und 19d angeordneten Drehriegels 21 werden die Betätigungsstangen zur Entriegelung der zugehörigen Entriegelungsbolzen 18 entgegengesetzt bewegt. Jeder Drehriegel 21 besteht aus zwei beidseitig des Trennwandelementes 12 angeordneten Handgriffen 21a und einem Betätigungsnocken 21b, der zwischen den beiden abgewinkelten Stegen 19c und 19d liegt. Dadurch können die Betätigungsgestänge 19 von beiden Seiten betätigt werden.

Jeder Verriegelungsbolzen ist in einem Führungsprofil 22 geführt. Jede Druckfeder 20 stützt sich mit einem Ende an dem dem Drehriegel 21 zugeordneten Steg des Führungsprofils 22 ab. Das andere Ende drückt im dargestellten Ausführungsbeispiel gegen einen Querstift, der in den jeweiligen Verriegelungsbolzen 18 eingesetzt ist.

Jede Betätigungsstange 19a, 19b ist an der dem Verriegelungsbolzen 18 zugewandten Seite zur Verschraubung mit diesem abgewinkelt.

An der unteren Seite ist an jede vertikale Profilschiene 17 auf einem horizontalen festen Bolzen eine Laufrolle 23 frei drehbar gelagert. Der Bolzen ist mittels eines Winkels mit der Profilschiene verbunden. In den aus den Profilschienen 17 gebildeten Rahmen 16 ist eine Füllungsplatte aus einem thermisch isolierenden Material eingesetzt.

In der normalen Stellung greifen alle vier Verriegelungsbolzen 18 in jeweils ein Loch der oberen und unteren Lochschiene ein, so daß das jeweilige Trennwandelement 12 feststeht. Soll das Trennwandelement 12 verfahren werden, wird der Drehriegel 21 von der in der Figur 7 rechten Stellung in die in der Figur 7 dargestellte linke Stellung verfahren, wodurch die Verriegelungsbolzen 18 aufeinander zu bewegt werden, so daß das Trennwandelement 12 um die durch die rechten Verriegelungsbolzen 18 bestimmte Schwenkachse schwenkbar ist. Dadurch kann jedes Trennwandelement 12 innerhalb des Laderaumes an die Stelle umgesetzt werden, an die es zur Unterteilung des Laderaumes notwendig ist. Zum Umsetzen sind immer die Verriegelungsbolzen 18 einer Seite entriegelt, während die Verriegelungsbolzen 18 der anderen Seite verriegelt sind. Da sich die Laufrollen 23 auf dem Boden des Aufbaus 10 abstützen, braucht das Trennwandelement 12 beim Umsetzen nicht getragen zu werden, sondern es kann gerollt werden. Sobald die entriegelten Verriegelungsbolzen 18 in den Bereich der Löcher der Lochschienen kommen, kann der Handgriff 21 in die verriegelnde Stellung geschwenkt werden. Die Verriegelungsbolzen 18 werden dann durch die Druckfedern 18 in die Löcher gedrückt, sobald sie fluchtend dazu stehen. Diese Stellung kann durch eine leichte Bewegung des Trennwandelementes 12 erreicht werden.

Selbst wenn der Fahrer es nicht bemerkt, daß nur ein Verriegelungsbolzen in die Lochschiene eingreift, ergibt sich durch eine leichte Bewegung des Trennwandelementes 12 beim Fahren doch die verriegelte Stellung des zuvor nicht eingreifenden Verriegelungsbolzens 18. Durch die zuvor beschriebene Konstruktion ergibt sich demzufolge auch eine extrem hohe Sicherheit.

## Patentansprüche

1. Kühlfahrzeug mit einem kofferartigen Aufbau (10), dessen Laderaum durch flächige und bewegliche und durch in den Eckbereichen mit Verriegelungselementen (18) versehene Trennwandelemente (12) in Kammern aufteilbar ist, **dadurch gekennzeichnet, dass** die beweglichen Trennwandelemente (12) baugleich gestaltet und nach Art eines Baukastensystems innerhalb des gesamten Laderaumes zur Bildung der Kammern in Längs- und in Querrichtung bewegbar sind, wobei die feste Breite des kofferartigen Aufbaues ein ganzzahliges Vielfaches der Breite eines Trennwandelementes (12) ist, und dass jedes Trennwandelement (12) an einer ausgewählten Stellung innerhalb des Laderaumes platzierbar ist, und dass die bildbaren Kammern gleich oder unterschiedlich groß sind.

2. Kühlfahrzeug nach Anspruch 1, **dadurch gekennzeichnet, dass** die Trennwandelemente (12) in im Dach und im Boden des Aufbaus (10) des Kühlfahrzeuges (11) in jeweils einer Ebene liegenden Lochschienen mittels der Verriegelungselemente (18) festgelegt sind.

3. Kühlfahrzeug nach Anspruch 1 oder 2, **dadurch gekennzeichnet, dass** die Verriegelungselemente durch Federn (20) belastete Verriegelungsbolzen (18) sind, und dass die Verriegelungsbolzen (18) einer Seite jedes Trennwandelementes (12) durch ein zugehöriges Gestänge (19) entgegen der Wirkung der Federn (20) entriegelbar sind.

4. Kühlfahrzeug nach Anspruch 3, **dadurch gekennzeichnet, dass** das Gestänge (19) jeder Seite zwei Betätigungsstangen (19a, 19b) aufweist, die sich an den den Verriegelungsbolzen (18) abgewandten Bereichen überlappen, und dass diesem Bereich ein Drehriegel (21) derart zugeordnet ist, dass bei einer vorgegebenen Drehrichtung die Betätigungsstange (19a, 19b) zur Entriegelung der Verriegelungsbolzen (18) in entgegengesetzten Richtungen bewegbar sind.

5. Kühlfahrzeug nach Anspruch 4, **dadurch gekennzeichnet, dass** der Drehriegel (21) an beiden Seiten des Trennwandelementes (12) einen Handgriff (21 a) aufweist.

6. Kühlfahrzeug nach Anspruch 5, **dadurch gekennzeichnet, dass** jede Betätigungsstange (19a, 19b) an dem dem zugehörigen Verriegelungsbolzen (18) abgewandten Ende in Richtung zum gegenüberliegenden Außenrand des Trennwandelementes (12) abgewinkelt ist, und dass zwischen den beiden abgewinkelten Stegen (19c, 19d) der Drehriegel (21) gelagert ist.

7. Kühlfahrzeug nach Anspruch 6, **dadurch gekennzeichnet, dass** der Drehriegel (21) zum Verfahren der Betätigungsstange (19a, 19b) einen drehbaren Nocken (21b) aufweist, der zwischen den abgewinkelten Stegen (19c, 19d) angeordnet ist.

8. Kühlfahrzeug nach einem oder mehreren der vorhergehenden Ansprüche 3 bis 7, **dadurch gekennzeichnet, dass** jede den Verriegelungsbolzen (18) in die verriegelnde Position drückende bzw. haltende Feder eine Druckfeder (20) ist, die sich mit einem Ende an einer Innenfläche eines Führungsprofils (22) für den Verriegelungsbolzen (18) und mit dem anderen Ende an einer Ringfläche oder einen Querstift des Verriegelungsbolzens (18) abstützt.

9. Kühlfahrzeug nach einem oder mehreren der vorhergehenden Ansprüche 4 bis 8, **dadurch gekennzeichnet, dass** jede Betätigungsstange (19a, 19b) des Gestänges (19) an der dem Verriegelungsbolzen (18) zugewandten Seite abgewinkelt und mit dem Verriegelungsbolzen (18) fest verbunden ist.

10. Kühlfahrzeug nach einem oder mehreren der vorhergehenden Ansprüche 1 bis 9, **dadurch gekennzeichnet, dass** jedes Trennwandelement (12) in den beiden unteren Eckbereichen jeweils eine Stützrolle (23) aufweist, die sich auf den Boden des Aufbaus (10) beim Umsetzen des jeweiligen Trennwandelementes (12) abstützt.

11. Kühlfahrzeug nach einem oder mehreren der vorhergehenden Ansprüche 1 bis 10, **dadurch gekennzeichnet, dass** jedes Trennwandelement (12) zumindest an den vertikalen Längsrändern durch eine Profilschiene (17) begrenzt ist, und dass innerhalb dieser Profilschiene (17) die Gestänge (19) und die Verriegelungsbolzen (18) mit den zugehörigen Druckfedern (20) liegen.

12. Kühlfahrzeug nach Anspruch 11, **dadurch gekennzeichnet, dass** jede Profilschiene (17) ein Verbundprofil ist, welches aus zwei Metallprofilen und wenigstens einem die Metallprofile verbindenden Isoliersteg aus einem thermisch isolierenden Material besteht.

## Claims

1. Refrigerated vehicle having a box-like body (10), the loading area of which can be divided into chambers by flat and movable partition elements (12), which are provided with locking elements (18) in the corner regions, **characterized in that** the movable partition elements (12) are of structurally identical design and are movable in the longitudinal and in the transverse direction within the entire loading area in the manner of a modular system in order to form the chambers, the fixed width of the box-like body being an integral multiple of the width of a partition element (12), and **in that** each partition element (12) can be placed at a selected position within the loading area, and **in that** the chambers which can be formed are identical or different in size.

2. Refrigerated vehicle according to Claim 1, **characterized in that** the partition elements (12) are secured by means of the locking elements (18) in perforated rails situated in each case in a plane in the roof and in the floor of the body (10) of the refrigerated vehicle (11).

3. Refrigerated vehicle according to Claim 1 or 2, **characterized in that** the locking elements are locking bolts (18) loaded by springs (20), and **in that** the locking bolts (18) of one side of each partition element (12) can be released counter to the action of the springs (20) by means of an associated linkage (19).

4. Refrigerated vehicle according to Claim 3, **characterized in that** the linkage (19) of each side has two actuating rods (19a, 19b) which overlap in the regions facing away from the locking bolts (18), and **in that** this region is assigned a rotary locking bar (21) in such a manner that, given a predetermined direction of rotation, the actuating rods (19a, 19b) can be moved in opposite directions in order to release the locking bolts (18).

5. Refrigerated vehicle according to Claim 4, **characterized in that** the rotary locking bar (21) has a handle (21a) on both sides of the partition element (12).

6. Refrigerated vehicle according to Claim 5, **characterized in that** each actuating rod (19a, 19b) at the end facing away from the associated locking bolt (18) is angled in the direction towards the opposite outer edge of the partition element (12), and **in that** the rotary locking bar (21) is mounted between the two angled webs (19c, 19d).

7. Refrigerated vehicle according to Claim 6, **characterized in that** the rotary locking bar (21) has, for moving the actuating rod (19a, 19b), a rotatable cam (21b) which is arranged between the angled webs (19c, 19d).

8. Refrigerated vehicle according to one or more of the preceding Claims 3 to 7, **characterized in that** each spring pressing the locking bolt (18) into the locking position and keeping it there is a compression spring (20) which is supported at one end on an inner surface of a guide profile (22) for the locking bolt (18) and is supported at the other end on an annular surface or a transverse pin of the locking bolt (18).

9. Refrigerated vehicle according to one or more of the preceding Claims 4 to 8, **characterized in that** each actuating rod (19a, 19b) of the linkage (19) is angled on the side facing the locking bolt (18) and is connected fixedly to the locking bolt (18).

10. Refrigerated vehicle according to one or more of the preceding Claims 1 to 9, **characterized in that** each partition element (12) has, in the two lower corner regions, a respective supporting roller (23) which is supported on the floor of the body (10) during the moving of the particular partition element (12).

11. Refrigerated vehicle according to one or more of the preceding Claims 1 to 10, **characterized in that** each partition element (12) is bounded at least on the vertical longitudinal edges by a profiled rail (17), and **in that** the linkage (19) and the locking bolts (18) together with the associated compression springs (20) are situated within this profiled rail (17).

12. Refrigerated vehicle according to Claim 11, **characterized in that** each profiled rail (17) is a composite profile which consists of two metal profiles and at least one insulating web of a thermally insulating material, the said web connecting the metal profiles.

## Revendications

1. Véhicule frigorifique avec une carrosserie de type caisson (10) dont la surface de chargement peut être divisée en compartiments grâce à des éléments de parois de séparation (12) plans et mobiles, dotés d'éléments de verrouillage (18) dans les zones d'angles, **caractérisé en ce que** les éléments de parois de séparation mobiles (12) sont de configuration identique et peuvent être déplacés dans le sens longitudinal et transversal à la manière d'un système modulaire sur toute la surface de chargement pour former les compartiments, la largeur fixe de la carrosserie de type caisson étant un multiple entier de la largeur d'un élément de paroi de séparation (12), **en ce que** chaque élément de paroi de séparation (12) peut être placé dans une position choisie à l'intérieur de la surface de chargement et **en ce que** les compartiments pouvant être formés sont de la même taille ou de tailles différentes.

2. Véhicule frigorifique selon la revendication 1, **caractérisé en ce que** les éléments de parois de séparation (12) sont fixés dans des rails perforés qui se trouvent dans le toit et dans le plancher de la carrosserie (10) du véhicule frigorifique (11), respectivement sur un niveau, au moyen des éléments de verrouillage (18).

3. Véhicule frigorifique selon la revendication 1 ou 2, **caractérisé en ce que** les éléments de verrouillage sont des doigts de verrouillage (18) sollicités par des ressorts (20) et **en ce que** les doigts de verrouillage (18) d'un côté de chaque élément de paroi de séparation (12) peuvent être déverrouillés contre l'effet des ressorts (20) grâce à une tringlerie (19) qui en fait partie.

4. Véhicule frigorifique selon la revendication 3, **caractérisé en ce que** la tringlerie (19) de chaque côté comporte deux barres d'actionnement (19a, 19b) qui se chevauchent dans les zones éloignées des doigts de verrouillage (18) et **en ce qu'**un loquet rotatif (21) est affecté à cette zone de telle manière que pour un sens de rotation donné les barres d'actionnement (19a, 19b) pour le déverrouillage des doigts de verrouillage (18) puissent bouger dans des sens opposés.

5. Véhicule frigorifique selon la revendication 4, **caractérisé en ce que** le loquet rotatif (21) comporte une poignée (21 a) des deux côtés de l'élément de paroi de séparation (12).

6. Véhicule frigorifique selon la revendication 5, **caractérisé en ce que** chaque barre d'actionnement (19a, 19b) est coudée en direction du bord extérieur, situé du côté opposé, de l'élément de paroi de séparation (12), à son extrémité éloignée du doigt de verrouillage afférent (18), et **en ce que** le loquet rotatif (21) est monté entre les deux parties coudées (19c, 19d).

7. Véhicule frigorifique selon la revendication 6, **caractérisé en ce que** le loquet rotatif (21) de déplacement de la barre d'actionnement (19a, 19b) comporte une came rotative (21b) qui est disposée entre les parties coudées (19c, 19d).

8. Véhicule frigorifique selon une ou plusieurs des revendications précédentes 3 à 7, **caractérisé en ce que** chaque ressort qui presse et/ou maintient le doigt de verrouillage (18) dans la position de verrouillage est un ressort de compression (20) qui s'appuie par une extrémité sur une surface intérieure d'un profilé de guidage (22) pour le doigt de verrouillage (18) et, par l'autre extrémité, sur une surface annulaire ou une goupille transversale du doigt de verrouillage (18).

9. Véhicule frigorifique selon une ou plusieurs des revendications précédentes 4 à 8, **caractérisé en ce que** chaque barre d'actionnement (19a, 19b) de la tringlerie (19) est coudée sur le côté tourné vers le doigt de verrouillage (18) et reliée de manière fixe au doigt de verrouillage (18).

10. Véhicule frigorifique selon une ou plusieurs des revendications précédentes 1 à 9, **caractérisé en ce que** chaque élément de paroi de séparation (12) comporte dans les deux zones d'angles inférieures respectivement un galet d'appui (23) qui s'appuie sur le plancher de la carrosserie (10) lors du changement de place de l'élément de paroi de séparation (12) concerné.

11. Véhicule frigorifique selon une ou plusieurs des revendications précédentes 1 à 10, **caractérisé en ce que** chaque élément de paroi de séparation (12) est au moins limité sur ses bords longitudinaux verticaux par un rail profilé (17) et **en ce que** la tringlerie (19) et le doigt de verrouillage (18) avec les ressorts de pression (20) afférents se trouvent à l'intérieur de ce rail profilé (17).

12. Véhicule frigorifique selon la revendication 11, **caractérisé en ce que** chaque rail profilé (17) est un profilé composite qui est composé de deux profilés en métal et d'au moins une partie intermédiaire isolante en matériau calorifuge.
